# FASCICULE DE BREVET EUROPEEN

(11) **EP 2 647 243 B1**
(45) Date de publication et mention de la délivrance du brevet: **22.08.2018**
(21) Numéro de dépôt: 11799789.0
(22) Date de dépôt: 28.11.2011
(51) Int. Cl.: H04W 36/12, H04W 48/00, H04W 88/16

(54) **TECHNIQUE DE COMMUNICATION ENTRE UN ÉQUIPEMENT UTILISATEUR ET UN RÉSEAU DE DONNÉES DANS UN RÉSEAU DE COMMUNICATION**
VERFAHREN ZUR KOMMUNIKATION ZWISCHEN EINEM BENUTZERGERÄT UND EINEM DATENNETZ IN EINEM KOMMUNIKATIONSNETZ
TECHNIQUE FOR COMMUNICATION BETWEEN USER EQUIPMENT AND A DATA NETWORK IN A COMMUNICATION NETWORK

(30) Priorité: 30.11.2010 FR 1059935
(43) Date de publication de la demande: 09.10.2013
(73) Titulaire: Orange, 75015 Paris (FR)
(72) Inventeur: BREQUIGNY, Guillaume, F-27200 Vernon (FR); BARANKANIRA, Delphin, F-92160 Antony (FR)
(86) Numéro de dépôt international: PCT/FR2011/052787
(87) Numéro de publication internationale: WO 2012/072929

(56) Documents cités:
- US-A1- 2007 253 359
- "3rd Generation Partnership Project; Technical Specification Group Services and System Aspects; Multi access PDN connectivity and IP flow mobility (Release 9)", 3GPP STANDARD; 3GPP TR 23.861, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.3.0, 10 février 2010 (2010-02-10), pages 1-49, XP050401889,
- "3rd Generation Partnership Project; Technical Specification Group Services and System Aspects; IP flow mobility and seamless Wireless Local Area Network (WLAN) offload; Stage 2 (Release 10)", 3GPP STANDARD; 3GPP TS 23.261, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 29 septembre 2010 (2010-09-29), pages 1-22, XP050442325,
- "3rd Generation Partnership Project; Technical Specification Group Services and System Aspects; Local IP Access and Selected IP Traffic Offload (Release 10)", 3GPP STANDARD; 3GPP 23.829, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.3.0, 22 septembre 2010 (2010-09-22) , pages 1-44, XP050442123,

## Description

L'invention se situe dans le domaine des réseaux de communication dans lesquels l'accès s'effectue en mode paquet.

Des évolutions du réseau de communication mobile UMTS, pour « Universal Mobile Terrestrial System », normalisé par l'organisme 3GPP sont en cours de discussion. Ces évolutions constituent la base d'une future quatrième génération et sont également appelées LTE, pour « Long Term Evolution ». Elles prévoient notamment une évolution du réseau coeur, EPC, pour « Evolved Packet Core », dans lequel les échanges s'effectuent uniquement en mode paquet. Lors de son attachement au réseau mobile, l'équipement utilisateur UE établit une session avec un réseau de données paquet et obtient une adresse dans ce réseau. Ainsi, l'équipement utilisateur possède une connectivité permanente tant qu'il est attaché au réseau mobile. L'équipement utilisateur UE est identifié par une adresse IPv4 et/ou par un préfixe IPv6. Le réseau de données paquet est quant à lui identifié par un identifiant du réseau de données APN, pour « Access Point Name ». Cette session est également appelée « connexion PDN », PDN pour « Packet Data Network ». Une telle session comprend au moins un média, appelé « bearer » en anglais, par défaut et peut comprendre un ou plusieurs médias dédiés.

Cette session est établie entre l'équipement utilisateur UE et le réseau de données par l'intermédiaire d'une passerelle d'accès P-GW. Cette passerelle d'accès P-GW est l'entité du réseau de communication mobile en charge de l'interface avec le réseau de données paquet. Une passerelle P-GW peut ainsi permettre d'accéder à des services proposés sur le réseau de communication Internet ou bien des services proposés par un opérateur.

La demande de brevet publiée sous la référence US 2007/0253359 présente un système dans lequel un équipement d'un réseau de communication commande à un équipement utilisateur ayant établi une session avec un premier réseau de communication, d'établir une nouvelle session avec un deuxième réseau de communication.

Un opérateur du réseau de communication peut souhaiter avoir une certaine flexibilité dans le choix de la passerelle d'accès en fonction d'un service demandé par l'équipement utilisateur. Il n'est pas possible dans la version actuelle des normes de modifier la passerelle d'accès P-GW, qui a permis d'établir une session.

Un des buts de l'invention est de remédier à des problèmes, insuffisances ou inconvénients de l'état de la technique et/ou d'y apporter des améliorations.

Selon un premier aspect, l'invention a pour objet un procédé de communication dans un réseau de communication en mode paquet entre un équipement utilisateur et un réseau de données, une session ayant été établie entre ledit équipement utilisateur et une passerelle d'accès au réseau de données par l'intermédiaire d'un réseau d'accès. Ce procédé comprend :
- une étape de détection d'une requête d'accès à un service à partir d'au moins un paquet transmis par l'équipement utilisateur au moyen de la session établie ;
- une première étape de détermination en fonction d'au moins un critère qu'une nouvelle session est à établir ;
- une étape d'envoi à l'équipement utilisateur d'une commande d'établissement d'une nouvelle session, ledit équipement utilisateur initiant l'établissement de la nouvelle session ;
- une deuxième étape de détermination d'une autre passerelle d'accès, ladite autre passerelle étant adaptée au service requis par l'équipement utilisateur ;
- une phase d'établissement de la nouvelle session initiée par l'équipement utilisateur, à l'issue de laquelle la nouvelle session est établie entre ledit équipement utilisateur et ladite autre passerelle.

Le réseau de communication est par exemple du type EPC, pour « Evolved Packet Core » et comprend notamment les évolutions prévues pour le réseau coeur dans le cadre des évolutions LTE.

Le réseau de données peut être le réseau de communication public Internet ou bien tout autre réseau de données externe, tel qu'un réseau Intranet, un réseau d'un opérateur.

L'accès de l'équipement utilisateur au réseau de communication peut s'effectuer par l'intermédiaire de différents types de réseaux d'accès. Le réseau d'accès peut être radio ou filaire. Le réseau d'accès radio peut être conforme aux versions de deuxième, de troisième génération et également aux évolutions à long terme de la troisième génération (LTE) définies par l'organisme 3GPP. Le réseau d'accès peut également être un réseau d'accès radio non 3GPP, tel qu'un accès WIFI ®, WiMAX, ... Le réseau d'accès peut encore être un réseau d'accès ADSL, pour « Asymmetric Digital Subscriber Line ».

Le procédé de communication permet ainsi déclencher un établissement d'une nouvelle session à l'initiative du réseau mais l'établissement effectif de celle-ci est initié par l'équipement utilisateur. La nouvelle passerelle d'accès à un réseau de données en mode paquet a été choisie par un des équipements du réseau pour être adaptée à la fourniture d'un service requis. Il est ainsi possible de spécialiser les passerelles d'accès P-GW en fonction de services particuliers. Le procédé de communication permet ainsi de répartir l'établissement de sessions relatives à un service entre une pluralité de passerelles d'accès.

Il est également possible d'établir la nouvelle session vers une passerelle d'accès P-GW mettant en oeuvre certaines fonctions particulières, telles que la facturation, le filtrage, le contrôle de politiques de service. Il est ainsi possible de mettre en oeuvre des politiques de qualité de service différenciées en fonction d'un niveau de facturation.

Il est ici souligné que les évolutions au niveau du réseau coeur dans le cadre des discussions LTE ne prévoient pas qu'un équipement du réseau de communication puisse commander à l'équipement utilisateur d'établir une session. Ceci permet de limiter les impacts au niveau de l'équipement utilisateur et d'être compatible avec la procédure d'établissement de session initiée par l'équipement utilisateur. En effet, dans un tel réseau, les équipements utilisateurs possèdent une connectivité permanente avec le réseau. Ainsi, il est uniquement prévu que l'établissement de session soit à l'initiative de l'équipement utilisateur. Par ailleurs, pour un réseau coeur paquet 2G/3G, la procédure de commande d'activation d'un contexte PDP ou session est déclenchée lorsque des paquets sont à acheminer à destination de l'équipement utilisateur. Elle nécessite qu'une information PDP statique soit associée à l'adresse PDP afin de pouvoir joindre l'équipement utilisateur et de ce fait, n'est pas mise en oeuvre dans les réseaux de communication. Cette procédure est utilisée ici dans un contexte différent de celui pour lequel elle est prévue, étant donné qu'une session est déjà établie et qu'elle permet d'établir une session vers une autre passerelle d'accès.

Il est également souligné que le procédé de communication est compatible avec les procédures telles que définies dans le cadre des évolutions au niveau du réseau coeur dans le cadre des discussions LTE et ne nécessitent que des modifications limitées.

Le fonctionnement au niveau de l'équipement utilisateur est également simplifié puisque dans un mode de réalisation, l'équipement utilisateur ne doit connaître qu'un seul identifiant de réseau de données APN. Dans ce cas, le réseau peut, quant à lui, gérer des identifiants de réseau de données différents et sélectionner un identifiant particulier en fonction de critères qui lui sont propres.

La détection de la requête d'accès à un service à partir d'au moins un paquet peut être effectuée directement à partir du paquet ou bien indirectement sur notification de l'équipement du réseau ayant reçu le paquet.

Selon une caractéristique particulière du procédé de communication, le critère appartient au groupe comprenant un identifiant du service, un identifiant d'une application.

Selon encore une autre caractéristique particulière, l'étape de détection est mise en oeuvre par inspection d'un flux de paquets associé à ladite session.

Cette inspection des paquets peut s'effectuer à différents niveaux OSI. Il peut s'agir d'inspection SPI pour « Shallow Packet Inspection » aux niveaux 3 ou 4 OSI. Il peut également s'agir d'inspection approfondie du flux de paquets de données aux niveaux 7 et supérieurs OSI ou « Deep Packet Inspection ».

Selon une autre caractéristique particulière du procédé de communication, l'autre passerelle est également déterminée en fonction d'au moins une information relative à l'équipement utilisateur.

Avantageusement, cette information appartient au groupe comprenant une information relative à une localisation, une information relative à des données d'abonnement, un type d'équipement utilisateur.

Ainsi, il permet également de choisir une passerelle d'accès P-GW, dont la localisation dans le réseau de communication est déterminée en fonction de la localisation de l'équipement utilisateur, afin d'optimiser l'acheminement des flux de paquets de données, par exemple pour un service de télévision.

Les données d'abonnement de l'utilisateur permettent d'obtenir une politique de qualité de service souscrite. La prise en compte de cette information permet ainsi de choisir une passerelle d'accès adaptée en fonction de la qualité de service souscrite. Étant donné qu'il est possible d'établir la nouvelle session vers une passerelle d'accès P-GW mettant en oeuvre certaines fonctions particulières, telles que la facturation, le filtrage, le contrôle de politiques de service, la mise en oeuvre de politiques de qualité de service différenciées en fonction de données de souscription, et par conséquent d'un niveau de facturation, est ainsi plus facilement mise en oeuvre.

Le type d'équipement utilisateur permet de sélectionner une passerelle d'accès en fonction par exemple de la génération du terminal (2G, 3G, LTE), de la génération de la carte SIM insérée dans le terminal, ...

Le type d'équipement utilisateur permet de sélectionner une passerelle d'accès en fonction par exemple de la génération du terminal (2G, 3G, LTE), de la génération de la carte SIM insérée dans le terminal, ...

Avantageusement, une des deux passerelles d'accès transmet une demande d'établissement d'une nouvelle session à un équipement de gestion de mobilité.

Ce message est par exemple un message « PDN Connectivity Request » utilisé sur une interface entre deux équipements du réseau. Il permet à l'équipement de gestion de mobilité de commander à l'équipement utilisateur l'établissement de la nouvelle session. Dans un mode de réalisation, l'équipement de gestion de mobilité met en oeuvre la deuxième étape de détermination d'une autre passerelle d'accès, suite à la réception du message en provenance de la passerelle d'accès au réseau. Dans d'autres modes de réalisation, l'autre passerelle d'accès est déterminée par un équipement apte à fournir des politiques réseaux, ce dernier initiant la création de session vers l'autre passerelle d'accès. L'autre passerelle d'accès transmet alors le message « PDN Connectivity Request » vers l'équipement de gestion de mobilité.

Selon une caractéristique particulière, la passerelle d'accès avec laquelle la session est établie met en oeuvre l'étape de détection et la première étape de détermination et transmet à l'équipement de gestion de mobilité la demande d'établissement de la nouvelle session, ledit équipement de gestion de mobilité mettant alors en oeuvre l'étape d'envoi de la commande d'établissement et la deuxième étape de détermination.

Cette mise en oeuvre du procédé de communication est particulièrement adaptée quand le réseau ne comprend pas d'équipement apte à fournir des politiques réseaux.

Lorsque le réseau de communication comprend des équipements de contrôle des politiques réseau et de la facturation, l'étape de détection et la première étape de détermination sont mises en oeuvre par un équipement appliquant des politiques réseau et, un équipement fournissant les politiques réseau détermine l'autre passerelle d'accès et transmet à ladite autre passerelle d'accès la demande de déclenchement d'établissement de la nouvelle session à l'initiative de l'équipement utilisateur.

Dans ce cas, l'autre passerelle d'accès au réseau déclenche l'établissement de la nouvelle session.

Selon un deuxième aspect, l'invention concerne également un système dans un réseau de communication en mode paquet, agencé pour établir au moins une session entre au moins un équipement utilisateur et une passerelle d'accès à un réseau de données par l'intermédiaire d'un réseau d'accès. Ce système comprend :
- des moyens de détection d'une requête d'accès à un service à partir d'au moins un paquet transmis par l'équipement utilisateur au moyen de la session établie ;
- des premiers moyens de détermination, agencés pour déterminer en fonction d'au moins un critère qu'une nouvelle session est à établir ;
- des moyens de communication, agencés pour envoyer à l'équipement utilisateur une commande d'établissement d'une nouvelle session et pour établir la nouvelle session entre l'équipement utilisateur et une passerelle d'accès, ledit équipement utilisateur initiant l'établissement de la nouvelle session ;
- des deuxièmes moyens de détermination d'une autre passerelle d'accès, ladite autre passerelle étant adaptée au service requis par l'équipement utilisateur.

Selon une caractéristique particulière du système, l'équipement utilisateur est agencé pour recevoir une commande d'établissement d'une nouvelle session et traiter ladite requête.

Selon un troisième aspect, l'invention concerne également un programme d'ordinateur comportant des instructions pour la mise en oeuvre du procédé de communication selon le premier aspect, mises en oeuvre par un équipement du réseau de communication, lorsque ce programme est exécuté par un processeur.

L'invention sera mieux comprise à l'aide de la description suivante de modes de réalisation particuliers du procédé de l'invention, en référence aux dessins annexés sur lesquels :
- la figure 1 représente les étapes du procédé de communication selon un mode particulier de réalisation de l'invention ;
- la figure 2 représente un réseau de communication en mode paquet selon un mode particulier de réalisation de l'invention ;
- la figure 3a représente les échanges de message et les étapes du procédé de communication mises en oeuvre selon une première variante d'un premier mode particulier de réalisation de l'invention ;
- la figure 3b représente les échanges de message et les étapes du procédé de communication mises en oeuvre selon une deuxième variante du premier mode particulier de réalisation de l'invention ;
- la figure 4 représente les échanges de message et les étapes du procédé de communication mises en oeuvre selon un deuxième mode particulier de réalisation de l'invention ;
- la figure 5 représente les échanges de message et les étapes du procédé de communication mises en oeuvre selon un troisième mode particulier de réalisation de l'invention ;
- les figures 6a, 6b, 6c représentent des équipements du réseau de communication selon des modes particuliers de réalisation de l'invention.

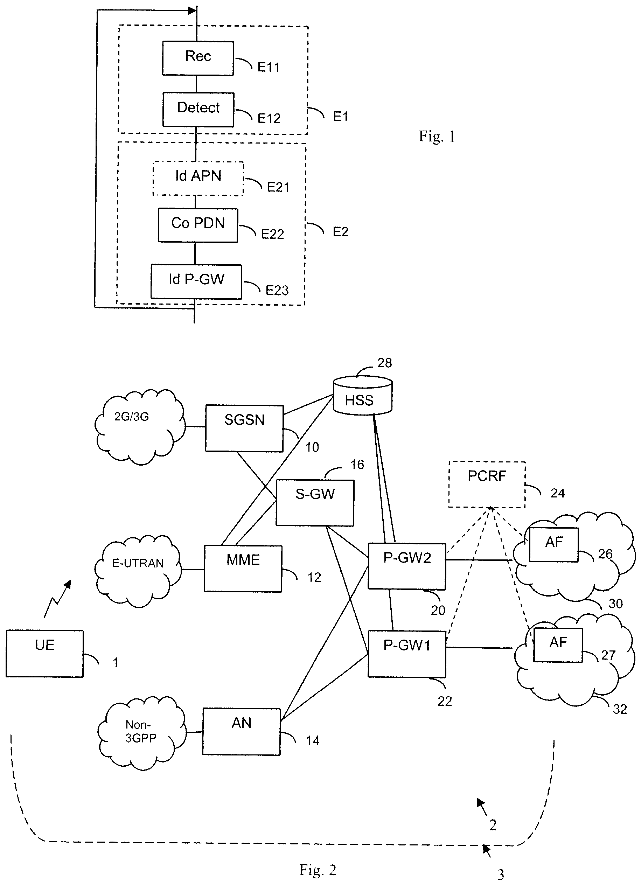

La figure 2 représente de façon simplifiée un réseau 2 de communication en mode paquet. Un équipement utilisateur UE 1 est représenté dans son environnement. L'équipement utilisateur 1 peut accéder en mode paquet à des réseaux de données 30, 32 par l'intermédiaire de différents types de réseaux d'accès. On se place ici dans le cas particulier où le réseaude communication 2 est conforme à une architecture EPS, pour « Evolved Packet System », telle que précisée dans la norme 3GPP TS 23 401 v8.11.0. Il est ici souligné que les versions correspondant à la « Release » 8 sont mentionnées par la suite. Aucune limitation n'est attachée à ce numéro de Release, le procédé de communication étant également applicable aux versions ultérieures de ces normes.

Le réseau d'accès peut être radio, conformes ou non aux spécifications définies par l'organisme de normalisation 3GPP, ou bien filaires.

Un premier type de réseau d'accès correspond à un réseau d'accès radio de deuxième génération 2G ou bien de troisième génération 3G. Dans ce cas, l'accès radio s'effectue par l'intermédiaire d'un équipement GERAN, pour « GSM/EDGE Radio Access network » pour un accès radio 2G, ou bien d'un équipement UTRAN, pour « UMTS Terrestrial Ressource Access Network » pour un accès radio 3G.

Un deuxième type de réseau d'accès correspond à un réseau d'accès radio LTE, pour « Long Term Evolution », correspondant aux évolutions de la troisième génération, également appelé pré-4G. Dans ce cas, l'accès radio s'effectue par l'intermédiaire d'un équipement E-UTRAN, pour « Evolved UTRAN ».

Ces deux premiers types de réseaux d'accès sont conformes à l'ensemble des spécifications définies par le groupe de normalisation 3GPP.

Un troisième type de réseau d'accès regroupe l'ensemble des accès non conformes au 3GPP. Le troisième type de réseau d'accès radio est relié à un équipement noeud d'accès AN 14. Il s'agit par exemple d'un accès filaire de type ADSL, un accès radio WIFI®, WiMAX pour « Worldwide Interoperability for Microwave Access », CDMA, ...

Les deux premiers types de réseaux d'accès sont reliés respectivement à des équipements de gestion de mobilité. Pour un accès radio 2G/3G, un tel équipement 10 est appelé SGSN, pour « Serving GPRS Service Node ». Pour un accès radio LTE, un tel équipement 12 est appelé MME, pour « Mobility Management Equipment ». Ces deux équipements de gestion de mobilité sont reliés à une passerelle de rattachement 16 S-GW, pour « Serving Gateway ». Ils sont reliés également à un serveur des abonnés du réseau HSS 28, pour « Home Subscriber System », ce serveur mémorisant l'ensemble des données de souscription des abonnés du réseau de communication 2.

La passerelle de rattachement 16 et l'équipement noeud d'accès 14 sont reliés à deux passerelles d'accès P-GW1 et P-GW2. La passerelle d'accès P-GW1 22 permet d'accéder au premier réseau de données 32 en mode paquet. La passerelle d'accès P-GW2 20 permet d'accéder au deuxième réseau de données 30 en mode paquet. A titre d'exemple, le premier réseau de données 32 correspond au réseau de données IP et permet un accès à des services de type Internet. Le deuxième réseau de données 30 correspond à un réseau de données propre à un opérateur et permet un accès à des services proposés par cet opérateur. Des serveurs applicatifs AF 26 et 27, pour « Application Function » sont également représentés sur la figure 2. Le serveur applicatif AF 26 permet de fournir un service à l'utilisateur dans le réseau de données 30. Le serveur applicatif AF 27 permet de fournir un service à l'utilisateur dans le réseau de données 32.

Il est également prévu de manière optionnelle que des équipements du réseau de communication 2 mettent en oeuvre un contrôle des politiques réseau et de la facturation PCC, pour « Policy Control and Charging ». Un tel réseau de communication 2 comprend alors une fonction d'application des politiques PCEF, pour « Policy and Charging Enforcement Function », et une fonction de fourniture des règles PCRF, pour « Policy and Charging Rules Function ». Sur la figure 2 est représenté un équipement de fourniture de règles PCRF 24. Celui-ci est connecté aux deux passerelles d'accès 20, 22. Dans ce cas, ces dernières mettent en oeuvre la fonction PCEF. Le réseau de communication 2 peut également comprendre la mise en oeuvre de règles de contrôle des politiques et de la facturation (fonction PCEF) en l'absence d'un équipement PCRF.

Il est bien entendu que le réseau de communication 2 représenté à la figure 2 ne comprend qu'un nombre limité d'équipements représentés afin de ne pas surcharger cette figure. Aucune limitation n'est attachée à cette représentation. Il est également souligné que la passerelle de rattachement S-GW et une des passerelles d'accès peuvent être regroupées dans un même équipement.

Par la suite, on appelle session ou connexion à un réseau de données paquet une association entre un équipement utilisateur UE, représenté par une adresse IPv4 et/ou un préfixe IPv6, et le réseau de données paquet, représenté par un identifiant de réseau de données APN, pour « Access Point Name ». Cette session peut être indifféremment appelée « session IP-CAN », « PDN Connexion » pour un accès LTE, « Contexte PDP » pour un accès 2G/3G.

Le procédé de communication entre un équipement utilisateur UE et un réseau de données va maintenant être décrit en relation avec la figure 1 dans un premier mode de réalisation.

Dans une première étape E1, plus précisément dans une sous-étape E11, une passerelle d'accès P-GW1 à un réseau de données paquet reçoit des paquets de données en provenance de l'équipement utilisateur UE au moyen d'une première session établie. Cette première session a été établie entre l'équipement utilisateur UE 1 et la passerelle d'accès P-GW1 22 par exemple lors de l'attachement de l'équipement utilisateur au réseau de communication 2. Aucune limitation n'est attachée au mode d'établissement de cette première session. La première session est établie par l'intermédiaire de la passerelle de rattachement S-GW 16. Toujours dans cette première étape E1, la passerelle d'accès P-GW1 22 détecte qu'au moins un des paquets de données reçus comprend une requête d'accès à un nouveau service donné.

La détection qu'il s'agit d'une requête d'accès à un service donné peut être réalisée selon différentes variantes :
- selon une première variante, il peut s'agir d'inspection d'un flux de paquets de données aux niveaux 3 ou 4 OSI, appelée également SPI pour « Shallow Packet Inspection ». Il s'agit dans ce cas d'une inspection de paquets de données IP et TCP, pour « Transmission Control Protocol », ou UDP, pour « User Datagram Protocol » ; plus précisément, la détection peut consister à détecter une adresse de destination IP et un port de destination donnés ;
- selon une deuxième variante, il peut également s'agir d'inspection approfondie du flux de paquets de données aux niveaux 7 et supérieurs OSI ou « Deep Packet Inspection ».

Dans une sous-étape E12, la passerelle d'accès P-GW1 22 détermine alors qu'il est nécessaire d'établir une nouvelle session entre l'équipement utilisateur UE 1 et une autre passerelle d'accès permettant un accès à un réseau de données paquet en fonction d'au moins un critère. Ce critère peut correspondre par exemple à un identifiant du service ou bien encore un identifiant d'une application. La passerelle d'accès P-GW1 22 transmet alors une demande d'établissement de la nouvelle session avec l'équipement utilisateur UE 1. Cette demande comprend un indicateur spécifique, par exemple un identifiant du service. Plus précisément, cette demande d'établissement est transmise à la passerelle de rattachement S-GW 16, qui la transmet à son tour à l'équipement de gestion de mobilité SGSN/MME 10, 12.

Dans une étape E2, plus précisément dans une sous-étape E21, l'équipement de gestion de mobilité SGSN/MME 10, 12 reçoit la demande d'établissement de la nouvelle session avec l'équipement utilisateur UE 1 et détermine un identifiant de réseau de données paquet en fonction de l'indicateur spécifique, en consultant par exemple une base de données DNS, pour « Domain Name Server ». Plus précisément, l'équipement de gestion de mobilité SGSN/MME 10, 12 interroge la base de données DNS sur la base d'un identifiant de réseau de données APN et de l'indicateur spécifique et obtient en retour le même ou un autre identifiant du réseau de données APN.

Dans une sous-étape E22 de l'étape E2, un des équipements du réseau commande un établissement de cette nouvelle session entre l'équipement utilisateur UE 1 et à destination de l'identifiant de réseau de données déterminé à la sous-étape E21, cet établissement de la nouvelle session étant à l'initiative de l'équipement utilisateur.

Dans une sous-étape E23 de l'étape E3, sur réception d'une demande d'établissement de la nouvelle session émise par l'équipement utilisateur, l'équipement de gestion de mobilité SGSN, MME 10, 12 détermine une autre passerelle d'accès en fonction de l'indicateur spécifique en consultant par exemple la base de données DNS. Plus précisément, l'équipement de gestion de mobilité SGSN/MME 10, 12 interroge la base de données DNS sur la base de l'identifiant de réseau de données APN et de l'indicateur spécifique et obtient en retour l'autre passerelle d'accès P-GW2 20. Optionnellement, une ou plusieurs informations relatives à l'équipement utilisateur peuvent également être prises en compte pour choisir l'autre passerelle d'accès P-GW2 20. Cette information peut correspondre à une information relative à une localisation de l'équipement utilisateur. Le choix de cette autre passerelle d'accès adaptée à la localisation de l'équipement utilisateur permet ainsi de diminuer la charge dans le réseau. Il peut également s'agir d'une information relative à des données d'abonnement de l'équipement utilisateur, ce qui permet de sélectionner une passerelle d'accès avec un niveau de service adapté à l'abonnement. Il peut encore d'agir d'un type de l'équipement utilisateur.

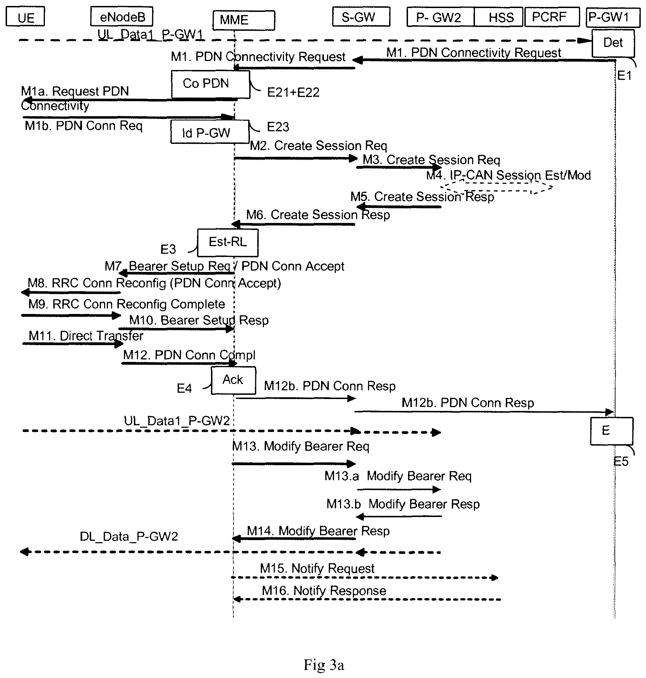

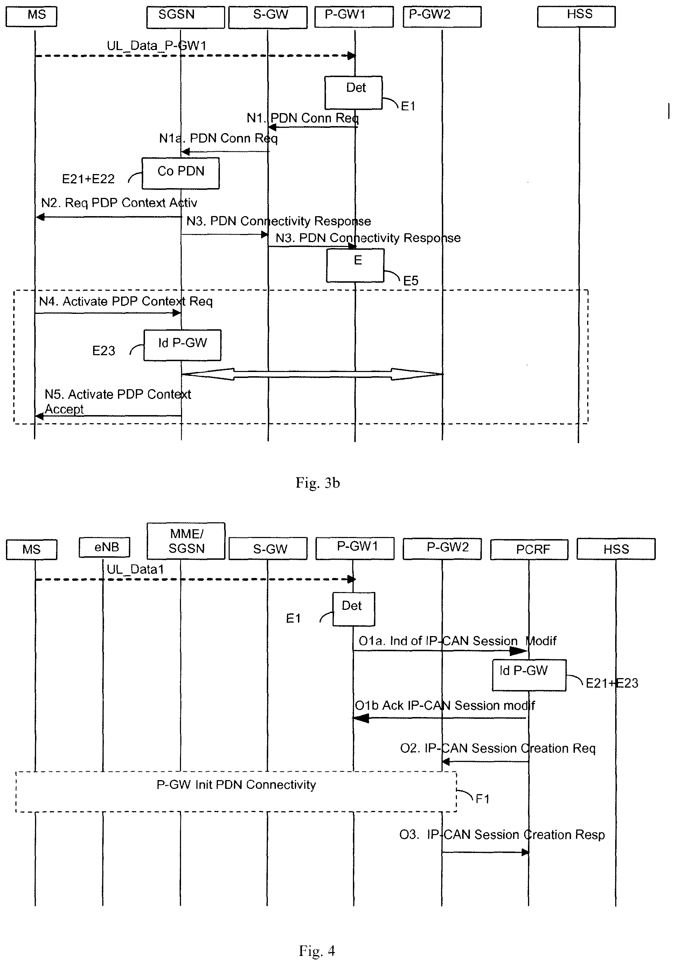

L'équipement du réseau mettant en oeuvre cette étape E2 est précisé ultérieurement en relation avec les descriptions des figures 3a, 3b.

Dans un deuxième mode de réalisation, des équipements du réseau mettent en oeuvre un contrôle des politiques réseau et de la facturation PCC, pour « Policy Control and Charging ».

Dans un tel deuxième mode de réalisation, la passerelle d'accès P-GW1 22 comprend une fonction d'application des politiques PCEF et met en oeuvre l'étape E1 décrite précédemment. La demande d'établissement d'une nouvelle session est alors transmise à l'équipement mettant en oeuvre la fonction de fourniture PCRF. Cet équipement PCRF 24 met alors en oeuvre les sous-étapes E21 et E23 et sollicite l'équipement de gestion de mobilité SGSN, MME pour que celui-ci commande (E22) à l'équipement utilisateur UE 1 l'établissement de la nouvelle session. Ce deuxième mode de réalisation est décrit plus précisément en relation avec la figure 4.

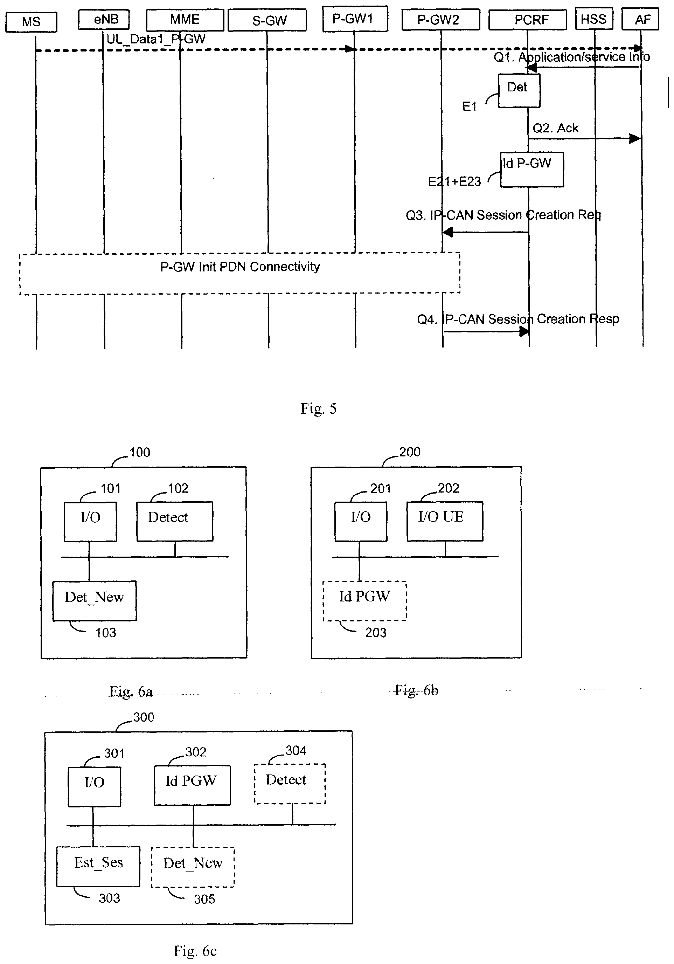

Dans un troisième mode de réalisation, un serveur applicatif AF 26 reçoit les paquets de données en provenance de l'équipement utilisateur UE 1. Le serveur applicatif AF 26 fournit alors à l'équipement PCRF 24 un message d'informations relatives au service. Ce message est reçu lors de la sous-étape E11. L'équipement mettant en oeuvre la fonction de contrôle de politiques met alors en oeuvre l'étape E1, les sous-étapes E21 et E23 et sollicite l'équipement de gestion de mobilité SGSN, MME pour que celui-ci commande (E22) à l'équipement utilisateur UE 1 l'établissement de la nouvelle session. Ce troisième mode de réalisation est décrit plus précisément en relation avec la figure 5.

Dans ces différents modes de réalisation, la sous-étape E21 est optionnelle. Dans ce cas, il est possible d'utiliser un identifiant de réseau de données APN par défaut. Il est également possible de mettre en oeuvre la sous-étape E23 de détermination d'une autre passerelle d'accès avant la sous-étape E22 d'envoi d'une commande d'établissement d'une nouvelle session.

Le premier mode de réalisation va être décrit plus précisément en relation avec les figures 3a et 3b. La figure 3a correspond à un accès de l'équipement utilisateur UE par l'intermédiaire d'un réseau d'accès E-UTRAN. La figure 3b correspond quant à elle à un accès de l'équipement utilisateur UE par l'intermédiaire d'un réseau d'accès GERAN ou UTRAN. La variante applicable à un réseau d'accès non 3GPP n'est pas décrite de manière explicite mais le procédé de communication est également transposable à ce type de réseau d'accès.

Plus précisément, on se place ici dans le cas particulier où le réseau de communication ne met pas en oeuvre une architecture comprenant un équipement PCRF. Toutefois, ceci n'exclut pas dans un tel réseau la mise en oeuvre de règles de contrôle des politiques et de la facturation de type PCC.

La figure 3a décrit les échanges entre les différentes entités pour la mise en oeuvre du procédé de communication selon le premier mode de réalisation dans une première variante, c'est-à-dire dans le cas d'un réseau d'accès E-UTRAN.

Comme décrit précédemment en relation avec la figure 1, la passerelle d'accès P-GW1 22 reçoit des paquets de données en provenance de l'équipement mobile UE 1, détecte une requête d'accès dans au moins un paquet, détermine qu'une nouvelle session est à établir et transmet une demande d'établissement de la nouvelle session à l'équipement de gestion de mobilité MME 12 par l'intermédiaire de la passerelle de rattachement S-GW 16. Dans ce premier mode de réalisation, la demande d'établissement est un message M1 « PDN Connectivity Request » comprenant notamment les paramètres suivants :
- un identifiant APN de réseau de données paquet auquel l'équipement utilisateur souhaite accéder ;
- un identifiant de la version IP demandée « PDN Type », c'est-à-dire IPv4, IPv4v6, IPv6 ;
- des informations destinées à être transmises à destination de l'équipement utilisateur UE 1 de façon transparente, regroupées dans un champ d'information appelé « Protocol Configuration Options » ;
- un type de demande « Request Type ».

Ces différents paramètres sont codés conformément au codage prévu dans la norme 3GPP TS 23.401, paragraphe 5.10.2, pour un message « PDN Connectivity Request » lorsqu'il est émis par l'équipement utilisateur UE.

Selon l'invention, le message M1 « PDN Connectivity Request » comprend également un indicateur spécifique, par exemple un identifiant du service.

Lors de cette étape E2 précédemment décrite en relation avec la figure 1, plus précisément à la sous-étape E21, l'équipement de gestion de mobilité MME 12 reçoit le message M1 « PDN Connectivity Request » et effectue une requête de résolution de nom de domaine DNS vers un serveur DNS, non représenté sur la figure 2. L'équipement de gestion de mobilité MME 12 interroge le serveur DNS sur la base de l'identifiant de réseau de données APN et de l'indicateur spécifique et obtient en retour un identifiant de réseau de données APN, identique ou différent de celui fourni, adapté au service requis. Il est ici souligné que cette interrogation de la base de données DNS peut également permettre d'obtenir une autre passerelle d'accès au réseau adaptée au service requis, comme décrit ultérieurement.

Lorsque l'identifiant de réseau de données APN n'est pas présent dans le message « PDN Connectivity Request », l'équipement de gestion de mobilité MME 12 détermine préalablement à la requête de résolution un identifiant de réseau de données APN à partir d'un contexte PDN souscrit par défaut.

Le serveur DNS détermine un identifiant de réseau de données APN adapté au service requis et fournit en retour à l'équipement de gestion de mobilité MME 12 un identifiant de réseau de données APN, identique ou non.

L'équipement de gestion de mobilité MME 12 vérifie alors en fonction des données de souscription de l'équipement utilisateur UE 1 que l'identifiant de réseau de données APN fourni par le serveur DNS est autorisé et si tel est le cas, l'équipement de gestion de mobilité MME 12 utilise pour les étapes suivantes l'identifiant de réseau de données APN fourni.

Dans la sous-étape E22 de l'étape E2, l'équipement de gestion de mobilité MME 12 déclenche alors une phase d'établissement de cette nouvelle session entre l'équipement utilisateur UE 1 à destination de l'identifiant de réseau de données APN.

Plus précisément, l'équipement de gestion de mobilité MME 12 envoie à l'équipement utilisateur UE 1 un message M1a «Request PDN Connectivity» de commande d'établissement d'une nouvelle session. Ce message M1a comprend les éléments d'information précédemment décrits en relation avec le message M1 « PDN Connectivity Request ». Toutefois, l'identifiant APN de réseau de données paquet a été remplacé avec celui qui a été déterminé à l'étape E21.

Il est rappelé qu'un tel message de commande d'établissement d'une session transmis d'un équipement du réseau vers un équipement utilisateur n'est pas prévu dans le cadre des évolutions LTE. En effet, l'équipement utilisateur possède une connectivité permanente avec le réseau de communication. Le besoin de traiter une demande de transmission de données à destination de l'équipement utilisateur en mode paquet, identifié pour les générations antérieures au LTE, a été jugé ainsi obsolète.

Il est ici souligné que selon l'invention, l'établissement de cette nouvelle session est commandée par un des équipements du réseau mais l'établissement effectif de celle-ci est à l'initiative de l'équipement utilisateur.

La norme 3GPP TS 23.401 « LTE ; General Packet Radio Services (GPRS) enhancements for Evolved Universal Terrestrial Radio Access Network (E-UTRAN) access », v8.11.0 précise notamment au paragraphe 5.10.2 en relation avec la figure 5.10.2-1, les échanges entre les différentes entités du réseau en réponse à une demande de connectivité PDN initiée par l'équipement utilisateur.

L'équipement utilisateur UE 1 transmet à l'équipement de gestion de mobilité MME 12, par l'intermédiaire du réseau d'accès un message M1b « PDN Connectivity Request », demandant l'établissement d'une session PDN à destination du réseau de données identifié par l'identifiant de réseau de données fourni par l'équipement de gestion de mobilité MME 12 dans le message M1a.

Dans une sous-étape E23, sur réception de ce message M1b, l'équipement de gestion de mobilité MME 12 détermine l'autre passerelle d'accès P-GW2 20 à ce réseau de données en fonction du service requis. Plus précisément, l'équipement de gestion de mobilité MME 12 interroge le serveur DNS sur la base de l'identifiant de réseau de données APN et de l'indicateur spécifique et obtient en retour l'autre passerelle d'accès P-GW2 20.

Une information relative à l'équipement utilisateur peut également être transmise au serveur DNS et ainsi prise en compte pour choisir l'autre passerelle d'accès P-GW2 20. Comme indiqué précédemment, il peut s'agir d'une information relative à une localisation de l'équipement utilisateur, d'une information relative à des données d'abonnement de l'équipement utilisateur ou bien encore d'une information relative à un type de l'équipement utilisateur.

Il est ici rappelé, comme décrit précédemment, que cette détermination de l'autre passerelle d'accès P-GW2 20 peut également être réalisée lors de l'interrogation du serveur DNS à la sous-étape E21 pour obtenir à la fois l'identifiant de réseau de données APN et l'autre passerelle d'accès.

La nouvelle session va alors être créée au niveau des équipements du réseau. L'équipement de gestion de mobilité MME 12 crée un message M2 « Create Session Request » et le transmet à la passerelle de rattachement S-GW 16. Cette dernière transmet à son tour un message M3 « Create Session Request» à la passerelle d'accès P-GW2 20. Si le contrôle dynamique des politiques et de la facturation est mis en oeuvre, la passerelle d'accès P-GW2 20 dialogue dans un échange M4 « IP-CAN Session Establishment/Modification » avec l'équipement PCRF 24. Puis, une fois la nouvelle session créée, la passerelle d'accès P-GW2 20 transmet la réponse dans un message M5 « Create Session Response » à destination de la passerelle de rattachement S-GW 16. La passerelle de rattachement S-GW 16 renvoie alors à l'équipement de gestion de mobilité MME 12 un message M6 « Create Session Response ». L'ensemble de ces échanges s'effectue conformément au paragraphe 5.10.2 de la norme TS 23.401 et n'est pas détaillé ici.

Puis, dans une étape E3, l'équipement de gestion de mobilité MME 12 établit la nouvelle session vers l'équipement utilisateur UE 1. L'ensemble de ces échanges s'effectue conformément au paragraphe 5.10.2 de la norme TS 23.401 lorsqu'il est initié par l'équipement utilisateur et est modifié pour mettre en oeuvre l'invention. L'équipement de gestion de mobilité MME 12 transmet un message M7 « PDN Connectivity Accept » à destination de l'équipement utilisateur UE 1 contenu dans un message de contrôle S1_MME « Bearer Setup Request ». Ce dernier est à destination du réseau d'accès E-UTRAN, celui-ci comprenant un équipement eNodeB. Selon l'invention, le message M7 « PDN Connectivity Accept » comprend notamment une indication que l'établissement a été commandé par le réseau. L'équipement eNodeB transmet alors un message M8 « PDN Connectivity Accept » contenu dans un message « RRC Connection Reconfiguration » à destination de l'équipement utilisateur UE 1. Selon l'invention, l'équipement utilisateur UE 1 est notamment agencé pour recevoir le message « PDN Connectivity Accept » comprenant l'indication qu'il est émis à l'initiative du réseau. L'équipement utilisateur UE 1 utilise les paramètres reçus dans le message M8 « PDN Connectivity Accept » contenu dans le message « RRC Connection Reconfiguration » pour mettre à jour une association entre le service requis et un média EPS. A cet effet, l'équipement utilisateur UE 1 s'appuie sur des filtres de niveau 3, 4 (TFT) ou 7 pour mettre à jour cette association. Une fois la reconfiguration effectuée, l'équipement utilisateur UE 1 transmet un message M9 « RRC Connection Reconfiguration Complete » à destination de l'équipement eNodeB. Ce dernier transmet à son tour un message M10 « Bearer Setup Response » à destination de l'équipement de gestion de mobilité MME 12. Puis, l'équipement utilisateur UE 1 transmet un message M11 « Direct Transfer » comprenant un message « PDN Connectivity Complete » à destination de l'équipement eNodeB. Ce dernier transmet alors le message M12 « PDN Connectivity Complete » à l'équipement de gestion de mobilité MME 12.

Le message M12 est reçu dans une étape E4 par l'équipement de gestion de mobilité MME 12.

Selon l'invention, l'équipement de gestion de mobilité MME 12 transmet alors un message M12b « PDN Connectivity Response » à destination de la passerelle de rattachement S-GW 16. La passerelle de rattachement S-GW 16 transmet à son tour le message M12b à destination de la passerelle d'accès P-GW1 22. Le message M12b est reçu par la passerelle d'accès P-GW1 22 dans une étape E5. Ceci met fin à la procédure de demande d'établissement d'une nouvelle session, qui a été déclenchée par la passerelle d'accès P-GW1 22 lors de l'étape El.

Parallèlement, suite à la réception des messages M10 « Bearer Setup Response » et M12 « PDN Connectivity Complete », l'équipement de gestion de mobilité MME 12 transmet un message M13 « Modify Bearer Request » à destination de la passerelle de rattachement S-GW 16. Les messages M13a « Modify Bearer Request », M13b « Modify Bearer Response » sont échangés le cas échéant avec la passerelle d'accès P-GW2 20 conformément à la norme 3GPP TS 23.401.

La passerelle de rattachement S-GW 16 transmet en réponse un message M14 « Modify Bearer Response » à l'équipement de gestion de mobilité MME 12.

L'équipement de gestion de mobilité MME 12 transmet ensuite un message M15 « Notify request » à destination du serveur HSS 28, ce message comprenant notamment un identifiant de la passerelle d'accès P-GW2 20 et l'identifiant de réseau de données APN associé. Le serveur HSS 28 mémorise ces identifiants en association avec l'équipement utilisateur UE 1 et transmet un message M16 « Notify Response» à destination de l'équipement de gestion de mobilité MME 12.

A l'issue de ces différentes étapes et échanges de message, la nouvelle session est établie entre l'équipement utilisateur UE 1 et la passerelle d'accès P-GW2 20 en relation avec l'identifiant de réseau de données APN. La passerelle d'accès P-GW2 20 a été sélectionnée en fonction d'un indicateur spécifique, par exemple le service requis, et le cas échéant, en fonction d'informations relatives à l'équipement utilisateur UE 1. L'établissement de la nouvelle session a été initié par l'équipement utilisateur mais sur commande d'un des équipements du réseau, plus précisément dans ce premier mode de réalisation sur commande de l'équipement de gestion de mobilité MME 12.

La figure 3b décrit les échanges entre les différentes entités pour la mise en oeuvre du procédé de communication selon le premier mode de réalisation, dans une deuxième variante, c'est-à-dire dans le cas d'un réseau d'accès GERAN/UTRAN. Dans ce cas, la session est également appelée « contexte PDP ».

Comme décrit précédemment en relation avec la figure 1, la passerelle d'accès P-GW1 22 reçoit des paquets de données en provenance de l'équipement mobile UE 1, détecte une requête d'accès à un service, détermine qu'une nouvelle session est à établir et transmet une demande d'établissement d'une nouvelle session à l'équipement de gestion de mobilité SGSN 10 par l'intermédiaire de la passerelle de rattachement S-GW 16. La demande d'établissement est un message N1 « PDN Connectivity Request» analogue au message M1, décrit précédemment en relation avec la figure 3a.

Lors de l'étape E2 précédemment décrite en relation avec la figure 1, l'équipement de gestion de mobilité SGSN 10 reçoit le message N1 « PDN Connectivity Request » et effectue les traitements décrits en relation avec la figure 3a, afin d'obtenir un identifiant de réseau de données APN.

Dans la sous-étape E22 de l'étape E2, l'équipement de gestion de mobilité SGSN 10 commande alors l'établissement de la nouvelle session à l'initiative de l'équipement utilisateur UE 1 et à destination de l'identifiant de réseau de données APN.

Pour rappel, la norme 3GPP TS 23.060 « GPRS ; Service Description ; Stage 2 », v8.10.0 précise notamment au paragraphe 9.2.2.2 en relation avec la figure 67 les échanges entre les différentes entités du réseau permettant à un équipement noeud passerelle GGSN de déclencher une procédure d'activation d'un contexte PDP par l'équipement de gestion de mobilité SGSN. Cette procédure d'activation d'un contexte PDP est à l'initiative de l'équipement noeud passerelle GGSN, sur réception de données à transmettre à destination de l'équipement utilisateur UE. Le noeud passerelle transmet à cet effet un message « PDU Notification Request » à l'équipement de gestion de mobilité SGSN. Il est ici rappelé qu'un noeud passerelle GGSN correspond à une combinaison des fonctions de la passerelle de rattachement S-GW et de la passerelle d'accès à un réseau de données P-GW.

Ainsi, cette procédure, telle que prévue dans la norme, ne prévoit pas une modification du noeud passerelle GGSN qui a transmis le message « PDU Notification Request ». Ainsi, les échanges décrits ici s'appuient sur cette procédure mais des modifications sont apportées à celle-ci pour mettre en oeuvre l'invention. Selon l'invention, l'établissement de cette nouvelle session est initié par l'équipement utilisateur mais est commandé par la mise en oeuvre de l'étape E2 au niveau de l'équipement de gestion de mobilité SGSN, une fois l'identifiant de réseau de données déterminé.

Plus précisément, l'équipement de gestion de mobilité SGSN 10 transmet un message N2 «Request PDP Context Activation » à destination de l'équipement utilisateur UE 1, afin que ce dernier initie l'établissement de la session, c'est-à-dire du contexte PDP requis. Selon l'invention, l'équipement de gestion de mobilité SGSN 10 transmet également un message N3 « PDN Connectivity Response » à destination de la passerelle de rattachement S-GW 16. La passerelle de rattachement S-GW 16 transmet à son tour le message N3 à destination de la passerelle d'accès P-GW1 22. Le message N3 est reçu par la passerelle d'accès P-GW1 22 dans une étape E5. Ceci met fin à la procédure de demande d'établissement d'une nouvelle session, qui a été déclenchée par la passerelle d'accès P-GW1 22 lors de l'étape E1.

L'équipement utilisateur UE 1 utilise les paramètres reçus dans le message N2 « Request PDP Context Activation » pour mettre à jour une association entre le service requis et un média. A cet effet, l'équipement utilisateur UE 1 s'appuie sur des filtres de niveau 3, 4 (TFT) ou 7 pour mettre à jour cette association. Une fois la reconfiguration effectuée, l'équipement utilisateur UE transmet alors un message N4 « Activate PDP Context Request » à destination de l'équipement de gestion de mobilité SGSN 10. Dans une sous-étape E23, sur réception de ce message N4, l'équipement de gestion de mobilité SGSN 10 détermine l'autre passerelle d'accès P-GW2 20 à ce réseau de données en fonction du service requis. Plus précisément, l'équipement de gestion de mobilité SSN 10 interroge le serveur DNS sur la base de l'identifiant de réseau de données APN et de l'indicateur spécifique et obtient en retour l'autre passerelle d'accès P-GW2 20.

Une information relative à l'équipement utilisateur peut également être transmise au serveur DNS et ainsi prise en compte pour choisir l'autre passerelle d'accès P-GW2 20. Comme indiqué précédemment, il peut s'agir d'une information relative à une localisation de l'équipement utilisateur ou bien encore d'une information relative à des données d'abonnement de l'équipement utilisateur.

Il est ici souligné que cette détermination de l'autre passerelle d'accès P-GW2 20 peut également être réalisée lors de l'interrogation du serveur DNS à la sous-étape E21 pour obtenir à la fois l'identifiant de réseau de données APN et l'autre passerelle d'accès.

L'équipement de gestion de mobilité SGSN 10 établit ensuite la nouvelle session avec la passerelle d'accès P-GW2 20. Une fois celle-ci établie, l'équipement de gestion de mobilité SGSN 10 transmet un message N5 « Activate PDP Context Accept » à l'équipement utilisateur UE 1.

A l'issue de ces différentes étapes et échanges de message, la nouvelle session est établie entre l'équipement utilisateur UE 1 et la passerelle d'accès au réseau de données P-GW2 20 en relation avec l'identifiant de réseau de données APN. La passerelle d'accès P-GW2 20 a été sélectionnée en fonction du service spécifique requis et le cas échéant, en fonction d'informations relatives à l'équipement utilisateur UE. L'établissement de la nouvelle session a été initié par l'équipement utilisateur mais sur commande d'un des équipements du réseau, plus précisément dans ce premier mode de réalisation sur commande de l'équipement de gestion de mobilité SGSN 10.

Le deuxième mode de réalisation va être décrit plus précisément en relation avec la figure 4. La figure 4 décrit les échanges entre les différentes entités pour la mise en oeuvre du procédé de communication selon le deuxième mode de réalisation, dans le cas d'un réseau d'accès radio E-UTRAN. La figure 4 est aisément transposable à un accès de l'équipement utilisateur UE 1 par l'intermédiaire du réseau d'accès radio GERAN ou UTRAN. La variante applicable à un réseau d'accès non 3GPP n'est pas décrite de manière explicite mais le procédé de communication est également transposable à ce type de réseau d'accès.

Plus précisément, on se place ici dans le cas particulier où le réseau de communication met en oeuvre une architecture avec un équipement PCRF pour assurer le contrôle des politiques et de la facturation PCC.

Comme décrit précédemment en relation avec la figure 1, lors de l'étape E1, la passerelle d'accès P-GW1 22, mettant en oeuvre la fonction PCEF, reçoit des paquets de données en provenance de l'équipement mobile UE 1, détecte une requête d'accès à un service et détermine qu'une nouvelle session doit être établie. La passerelle d'accès P-GW1 22 transmet alors une demande d'établissement d'une nouvelle session à l'équipement PCRF. Plus précisément dans ce cas, la demande d'établissement correspond à une demande de modification de la session. Dans ce deuxième mode de réalisation, la demande de modification correspond à un message O1a « Indication of IP-CAN Session Modification » demandant une modification de la session IP-CAN. Conformément à la norme 3GPP TS 23.203 v8.11.0, paragraphe 7.4.1 et figure 7.4, ce message O1a comprend les paramètres suivants :
- un champ d'information « Event report » ;
- un champ d'information « affected PCC rules » comprenant des règles de contrôle des politiques PCC affectées.

Selon l'invention, ce message O1a «Indication of IP-CAN Session Modification» comprend également :
- un identifiant de la session ou connexion PDN concernée, si celui-ci est disponible ;
- l'indicateur spécifique, par exemple l'identifiant du service ;
- l'adresse dans le réseau de la passerelle de rattachement S-GW.

Lors de l'étape E2 précédemment décrite en relation avec la figure 1, l'équipement PCRF 24 reçoit le message O1a « Indication of IP-CAN Session Modification » et corrèle les règles de contrôle de politiques avec la session IP-CAN et l'indicateur spécifique.

L'équipement PCRF 24 vérifie que la session entre l'équipement utilisateur UE 1 et la passerelle d'accès P-GW1 22 n'est pas adaptée et décide d'établir une nouvelle session IP-CAN. A partir de données associées au service, l'équipement PCRF 24 détermine la passerelle d'accès la plus adaptée, dans l'exemple décrit ici l'autre passerelle d'accès P-GW2 20 et un identifiant de réseau de données APN en fonction de l'indicateur spécifique. L'équipement PCRF 24 vérifie également les données de souscription associées à l'utilisateur. Ces dernières peuvent être internes à l'équipement PCRF ou bien obtenues à partir d'un équipement autre, tel que le serveur des abonnés du réseau HSS 28, un serveur de noms de domaine DNS, un équipement AAA, pour « Authentication, Authorization, Accounting », ce dernier étant en charge du processus de contrôle et de gestion des accès des utilisateurs à un réseau, ...

Une information relative à l'équipement utilisateur peut également être prise en compte pour choisir l'autre passerelle d'accès P-GW2 20. Comme indiqué précédemment, il peut s'agir d'une information relative à une localisation de l'équipement utilisateur, d'une information relative à des données d'abonnement de l'équipement utilisateur ou bien encore d'une information relative à un type de l'équipement utilisateur.

De façon optionnelle, lorsque l'adresse de la passerelle de rattachement S-GW n'a pas été fournie par la passerelle d'accès P-GW1 dans le message O1a, l'équipement PCRF 24 peut également obtenir lors de cette étape E2 notamment le noeud d'accès courant, par interrogation du serveur HSS 28 ou de l'équipement AAA. Le noeud d'accès courant peut être un équipement de gestion de mobilité MME 12 ou bien SGSN 10 ou bien une passerelle de rattachement S-GW 16 pour un réseau d'accès de type 3GPP (E-UTRAN, UTRAN, GERAN). Le noeud d'accès courant peut être de tout type pour un réseau d'accès non 3GPP.

L'équipement PCRF 24 transmet alors un message O1b « Acknowledge of IP-CAN Session Modification » à la passerelle d'accès P-GW1 22. Ce message O1b est conforme à la norme 3GPP TS 23.203 v8.11.0, paragraphe 7.4.1.

Selon l'invention, l'équipement PCRF 24 déclenche la création de la nouvelle session IP-CAN. A cet effet, l'équipement PCRF 24 transmet un message O2 « IP-CAN Session Creation Request » à destination de l'autre passerelle d'accès P-GW2 20. Ce message O2 comprend les éléments suivants :
- l'adresse dans le réseau de la passerelle de rattachement S-GW ;
- un identifiant public de l'équipement utilisateur, par exemple le numéro MSISDN, pour « Mobile Subscriber ISDN Number » ;
- l'identifiant de réseau de données APN déterminée.

La passerelle d'accès P-GW2 20 reçoit le message O2 « IP-CAN Creation Request » dans une étape F1. En fonction du type de réseau d'accès, E-UTRAN ou GERAN/UTRAN, la passerelle d'accès P-GW2 20 va initier des procédures différentes, représentées sous la forme d'un seul bloc « P-GW Init PDN Connectivity » sur la figure 4.

Lorsque le réseau d'accès est de type E-UTRAN, la passerelle d'accès P-GW2 20 commande un établissement de la nouvelle session comme décrit en relation avec la figure 3a. Plus précisément, la passerelle d'accès P-GW2 20 transmet un message M1 « PDN Connectivity Request » à la passerelle de rattachement S-GW 16 dont l'adresse a été transmise dans le message O2. Les différents échanges de message et étapes sont mis en oeuvre tels que décrits en relation avec la figure 3a. Les sous-étapes E21 de détermination de l'identifiant de réseau de données APN et E23 de détermination d'une autre passerelle d'accès ne sont pas mises en oeuvre au niveau de l'équipement de gestion de mobilité MME 12, étant donné que ceux-ci ont déjà été déterminés par l'équipement PCRF.

Lorsque le réseau d'accès est de type GERAN/UTRAN, la passerelle d'accès P-GW2 20 commande un établissement de la nouvelle session comme décrit en relation avec la figure 3b. Plus précisément, la passerelle d'accès P-GW2 20 transmet un message N1 « PDN Connectivity Request » à la passerelle de rattachement S-GW 16 dont l'adresse a été transmise dans le message O2. Les différents échanges de message et étapes sont mis en oeuvre tels que décrits en relation avec la figure 3b. Les sous-étapes de détermination E21 de l'identifiant de réseau de données et E23 de la passerelle d'accès ne sont pas mises en oeuvre au niveau de l'équipement de gestion de mobilité SGSN 10, étant donné que ceux-ci ont déjà été déterminés par l'équipement PCRF 24.

Une fois la nouvelle session créée, la passerelle d'accès P-GW2 20 transmet un message O3 « IP-CAN Session Creation Response » à destination de l'équipement PCRF 24.

A l'issue de ces différentes étapes et échanges de message, la nouvelle session est établie entre l'équipement utilisateur UE 1 et la passerelle d'accès P-GW2 20 en relation avec l'identifiant de réseau de données APN. La passerelle d'accès P-GW2 20 a été sélectionnée en fonction de l'indicateur spécifique, plus précisément le service requis, et le cas échéant, également en fonction d'informations relatives à l'équipement utilisateur UE. L'établissement de la nouvelle session a été initié par l'équipement utilisateur mais sur commande d'un des équipements du réseau, plus précisément dans ce deuxième mode de réalisation sur commande de l'équipement de gestion de mobilité SGSN/MME déclenché par une requête de l'équipement PCRF 24.

La figure 5 décrit les échanges entre les différentes entités pour la mise en oeuvre du procédé de communication selon le troisième mode de réalisation, dans le cas d'un réseau d'accès E-UTRAN.

Comme décrit précédemment en relation avec la figure 1, un serveur applicatif AF 26 reçoit des paquets de données en provenance de l'équipement mobile UE 1 par l'intermédiaire de la passerelle d'accès P-GW1 au moyen de la session établie et fournit à l'équipement PCRF 24 des informations relatives au service dans un message Q1 « Application/service Info ». Ce message Q1 comprend notamment des informations relatives à l'équipement utilisateur, telles que le numéro public MSISDN, une adresse dans le réseau de l'équipement utilisateur.

Le message Q1 est reçu par l'équipement PCRF lors de l'étape E1. Toujours lors de l'étape E1, l'équipement PCRF 24 détecte la requête d'accès au service à partir du message Q1 et détermine qu'une nouvelle session doit être créée. On souligne que dans ce troisième mode de réalisation, l'étape de détection est mise en oeuvre indirectement à partir d'au moins un paquet de données. L'équipement PCRF 24 acquitte le message Q1 par un message Q2 « Ack » à destination du serveur applicatif AF 26.

Lors de l'étape E2 précédemment décrite en relation avec la figure 1, l'équipement PCRF 24 corrèle les règles de contrôle de politiques avec la session IP-CAN et l'indicateur spécifique.

L'équipement PCRF 24 détecte que la session entre l'équipement utilisateur UE 1 et la passerelle d'accès P-GW1 22 n'est pas adaptée et décide d'établir une nouvelle session IP-CAN. A partir de données associées au service, l'équipement PCRF 24 détermine en fonction de l'indicateur spécifique la passerelle d'accès la plus adaptée, dans l'exemple décrit ici l'autre passerelle d'accès P-GW2 20, et un identifiant de réseau de données APN. L'équipement PCRF 24 vérifie également les données de souscription associées à l'utilisateur.

Une information relative à l'équipement utilisateur peut également être prise en compte pour choisir l'autre passerelle d'accès P-GW2. Comme indiqué précédemment, il peut s'agir d'une information relative à une localisation de l'équipement utilisateur, d'une information relative à des données d'abonnement de l'équipement utilisateur, ou bien encore d'une information relative à un type de l'équipement utilisateur.

La création de la nouvelle session est alors mise en oeuvre de façon analogue à ce qui a été décrit en relation avec la figure 4, par échange de messages Q3 « IP-CAN Session Creation Request » et Q4 « IP-CAN Session Creation Response ».

A l'issue de ces différentes étapes et échanges de message, la nouvelle session est établie entre l'équipement utilisateur UE 1 et la passerelle d'accès P-GW2 20 en relation avec l'identifiant de réseau de données APN. La passerelle d'accès P-GW2 20 a été sélectionnée en fonction de l'indicateur spécifique et le cas échéant, également en fonction d'informations relatives à l'équipement utilisateur UE 1. L'établissement de la nouvelle session a été initié par l'équipement utilisateur mais déclenché par un des équipements du réseau, plus précisément dans ce troisième mode de réalisation sur commande de l'équipement de gestion de mobilité SGSN/MME déclenché par une requête de l'équipement PCRF 24.

Il est ici souligné que les descriptions de ces deuxième et troisième modes de réalisation ont été réalisées dans le cas particulier où la fonction d'application des politiques PCEF est mise en oeuvre par la passerelle d'accès au réseau de données. Elles sont également transposables dans le cas particulier d'une option de la norme, dans laquelle une entité appelée TDF, pour « Traffic Détection Function », est externe à la passerelle d'accès au réseau.

Les modes de réalisation décrits en relation avec les figures 3a, 3b, 4 et 5 prévoient la mise en oeuvre de la sous-étape E21 de détermination d'un identifiant de réseau de données. Il est rappelé que cette sous-étape E21 est optionnelle, comme décrit précédemment.

Les modes de réalisation décrits en relation avec les figures 3a, 3b prévoient que la sous-étape E23 de détermination d'une autre passerelle d'accès est mise en oeuvre sur réception de la demande d'établissement de la nouvelle session en provenance de l'équipement utilisateur. Il est rappelé que cette sous-étape E23 peut être mise en oeuvre sur réception de la demande d'établissement en provenance de la passerelle d'accès au réseau, conjointement à la sous-étape E21 si celle-ci est mise en oeuvre.

Les figures 6a, 6b, 6c représentent de façon simplifiée des équipements du réseau de communication. Par souci de clarté, seuls les éléments des équipements nécessaires à la compréhension de l'invention sont représentés.

Un premier équipement 100 est représenté sur la figure 6a. Il comprend notamment :
- un module de communication 101, agencé pour communiquer avec les autres équipements du réseau ;
- un module de détection 102, agencé pour détecter une requête d'accès à un service à partir d'au moins un paquet transmis par l'équipement utilisateur au moyen de la session établie ;
- un module de détermination 103, agencé pour déterminer en fonction d'au moins un critère qu'une nouvelle session est à établir et déclencher un établissement d'une nouvelle session.

Un tel premier équipement 100 correspond à une passerelle d'accès P-GW1 selon les premier et deuxième modes de réalisation.

Un équipement de gestion de mobilité 200 est représenté à la figure 6b. Un tel équipement comprend notamment :
- un module de communication 201, agencé pour communiquer avec les autres équipements du réseau ;
- un module de communication 202, agencé pour communiquer avec l'équipement utilisateur par l'intermédiaire d'équipements du réseau d'accès.

Le module de communication 202 est notamment agencé pour commander à l'équipement utilisateur un établissement d'une nouvelle session et pour établir une session entre l'équipement utilisateur et une passerelle d'accès.

Dans le premier mode de réalisation, l'équipement de gestion de mobilité 200 comprend en outre :
- un module de détermination 203, agencé pour déterminer une autre passerelle d'accès adaptée au service requis par l'équipement utilisateur.

Optionnellement, le module de détermination 203 est également agencé pour déterminer un identifiant de réseau de données APN.

Le premier équipement 100 coopère notamment avec l'équipement de gestion de mobilité 200 du réseau de communication pour mettre en oeuvre le procédé de communication décrit précédemment selon le premier mode de réalisation.

Un équipement PCRF 300 est représenté sur la figure 6c et comprend notamment :
- un module de communication 301, agencé pour communiquer avec les autres équipements du réseau ;
- un module de détermination 302, agencé pour déterminer une autre passerelle d'accès adaptée au service requis par l'équipement utilisateur ;
- un module de déclenchement 303, agencé pour déclencher un établissement d'une nouvelle session entre l'équipement utilisateur et une autre passerelle d'accès déterminée.

Le premier équipement 100 coopère notamment avec l'équipement PCRF 300 pour mettre en oeuvre le procédé de communication décrit précédemment selon le deuxième mode de réalisation. L'équipement PCRF 300 coopère avec l'autre passerelle d'accès P-GW2 pour mettre en oeuvre le procédé de communication décrit précédemment selon le troisième mode de réalisation, notamment pour déclencher l'établissement de la nouvelle session par l'équipement de gestion de mobilité MME/SGSN.

Optionnellement, le module de détermination 302 est également agencé pour déterminer un identifiant de réseau de données APN.

Selon le troisième mode de réalisation, l'équipement PCRF 300 comprend en outre :
- un module de détection 304, agencé pour détecter une requête d'accès à un service à partir d'un message transmis par le serveur applicatif AF 26, dont l'émission est déclenchée par la réception d'au moins un paquet transmis par l'équipement utilisateur au moyen de la session établie ;
- un autre module de détermination 305, agencé pour déterminer en fonction d'au moins un critère qu'une nouvelle session est à établir.

L'équipement PCRF 300 coopère notamment avec l'autre passerelle P-GW2 pour mettre en oeuvre le procédé de communication décrit précédemment selon le troisième mode de réalisation, notamment pour déclencher l'établissement de la nouvelle session par l'équipement de gestion de mobilité MME/SGSN.

L'équipement utilisateur UE 1 comprend également selon l'invention des moyens agencés pour recevoir une commande d'établissement de la nouvelle session et pour traiter cette commande. Plus précisément, dans le cas d'un réseau d'accès E-UTRAN, ces moyens sont agencés pour recevoir un message de commande d'établissement « Request PDN Connectivity », transmettre en réponse à ce message de commande un message de demande d'établissement de session « PDN Connectivity Request » pour établir la nouvelle session, recevoir un message « PDN Connectivity Accept » indiquant que l'établissement est à l'initiative du réseau et porté par un message « RRC Connection Reconfiguration », mettre à jour une association entre le service requis et un média en fonction des messages reçus et transmettre un message « RRC Connection Reconfiguration Complete ». Dans le cas d'un réseau d'accès GERAN/UTRAN, ces moyens sont agencés pour recevoir un message de commande d'établissement « Request PDP Context Activation » émis à l'initiative du réseau, mettre à jour une association entre le service requis et un média en fonction des messages reçus et transmettre en réponse au message de commande un message « Activate PDP Context Request ».

L'invention concerne également un système 3 du réseau de communication en mode paquet, agencé pour établir au moins une session entre au moins un équipement utilisateur et une passerelle d'accès à un réseau de données par l'intermédiaire d'un réseau d'accès radio. Ce système comprend :
- un module de détection 102, 304 d'une requête d'accès à un service à partir d'au moins un paquet transmis par l'équipement utilisateur au moyen de la session établie ;
- un premier module de détermination 103, 305, agencé pour déterminer en fonction d'au moins un critère qu'une nouvelle session est à établir ;
- un deuxième module de détermination 203, 302, agencé pour déterminer une autre passerelle d'accès adaptée au service requis par l'équipement utilisateur ;
- un module de communication 202, agencé pour communiquer avec l'équipement utilisateur, notamment pour envoyer une commande d'établissement d'une nouvelle session à l'équipement utilisateur et pour établir une session entre l'équipement utilisateur et une passerelle d'accès, edit équipement utilisateur initiant l'établissement de la nouvelle session.

Les différents modules d'un équipement 100, 200, 300 sont agencés pour mettre en oeuvre celles des étapes du procédé de communication précédemment décrit exécutées par l'équipement. Il s'agit de préférence de modules logiciels comprenant des instructions logicielles pour faire exécuter celles des étapes du procédé de communication précédemment décrit, mises en oeuvre par un équipement du réseau de communication. L'invention concerne donc aussi :
- un programme pour équipement, comprenant des instructions de programme destinées à commander l'exécution de celles des étapes du procédé de communication précédemment décrit qui sont exécutées par ledit équipement, lorsque ledit programme est exécuté par un processeur de celui-ci ;
- un support d'enregistrement lisible par un équipement sur lequel est enregistré le programme pour équipement.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de communication dans un réseau de communication (2) en mode paquet entre un équipement utilisateur (1) et un réseau de données (30, 32), une session ayant été établie entre ledit équipement utilisateur et une passerelle (20, 22) d'accès au réseau de données par l'intermédiaire d'un réseau d'accès, ledit procédé comprenant :
- une étape de détection (E11, E1) d'une requête d'accès à un service à partir d'au moins un paquet transmis par l'équipement utilisateur au moyen de la session établie ;
- une première étape de détermination (E12, E1) en fonction d'au moins un critère qu'une nouvelle session est à établir ;
- une étape d'envoi (E22, E2) à l'équipement utilisateur d'une commande d'établissement d'une nouvelle session, ledit équipement utilisateur initiant l'établissement de la nouvelle session ;
- une deuxième étape de détermination (E23, E2) d'une autre passerelle d'accès, ladite autre passerelle étant adaptée au service requis par l'équipement utilisateur ;
- une phase d'établissement de la nouvelle session initiée par l'équipement utilisateur, à l'issue de laquelle la nouvelle session est établie entre ledit équipement utilisateur et ladite autre passerelle.

2. Procédé de communication selon la revendication 1, dans lequel le critère appartient au groupe comprenant un identifiant du service, un identifiant d'une application.

3. Procédé de communication selon la revendication 1, dans lequel l'étape de détection est mise en oeuvre par inspection d'un flux de paquets associé à ladite session.

4. Procédé de communication selon la revendication 1, dans lequel l'autre passerelle est également déterminée en fonction d'au moins une information relative à l'équipement utilisateur.

5. Procédé de communication selon la revendication 4, dans lequel ladite information appartient au groupe comprenant une information relative à une localisation, une information relative à des données d'abonnement, un type d'équipement utilisateur.

6. Procédé de communication selon la revendication 1, dans lequel une des deux passerelles d'accès transmet une demande d'établissement d'une nouvelle session à un équipement de gestion de mobilité (10, 12).

7. Procédé de communication selon la revendication 6, dans lequel la passerelle d'accès met en oeuvre l'étape de détection et la première étape de détermination et transmet à l'équipement de gestion de mobilité (10, 12) la demande d'établissement de la nouvelle session, ledit équipement de gestion de mobilité mettant alors en oeuvre l'étape d'envoi de la commande d'établissement et la deuxième étape de détermination.

8. Procédé de communication selon la revendication 1, dans lequel, le réseau de communication comprenant des équipements de contrôle des politiques réseau et de la facturation,
- l'étape de détection et la première étape de détermination sont mises en oeuvre par un équipement appliquant des politiques réseau (20, 22) ;
- un équipement fournissant les politiques réseau (24) détermine l'autre passerelle d'accès et transmet à ladite autre passerelle d'accès la demande de déclenchement d'établissement de la nouvelle session à l'initiative de l'équipement utilisateur.

9. Système (3) comprenant un réseau de communication (2) en mode paquet, ledit système étant agencé pour établir au moins une session entre au moins un équipement utilisateur (1) et une passerelle d'accès (20, 22) à un réseau de données (30, 32) par l'intermédiaire d'un réseau d'accès, ledit système comprenant :
- l'équipement utilisateur (1), la passerelle d'accès (20, 22) et le réseau d'accès ;
- des moyens de détection (102, 304) d'une requête d'accès à un service à partir d'au moins un paquet transmis par l'équipement utilisateur au moyen de la session établie ;
- des premiers moyens de détermination (103, 305), agencés pour déterminer en fonction d'au moins un critère qu'une nouvelle session est à établir ;
- des moyens de communication (202), agencés pour envoyer à l'équipement utilisateur une commande d'établissement d'une nouvelle session pour établir la nouvelle session entre l'équipement utilisateur et une autre passerelle d'accès du réseau de communication en mode paquet, ledit équipement utilisateur étant agencé pour initier l'établissement de la nouvelle session ;
- des deuxièmes moyens de détermination (203, 302) de ladite autre passerelle d'accès, ladite autre passerelle étant adaptée au service requis par l'équipement utilisateur.

10. Système selon la revendication 9, dans lequel l'équipement utilisateur est agencé pour recevoir une commande d'établissement d'une nouvelle session et traiter ladite requête.

11. Programme d'ordinateur comportant des instructions pour la mise en oeuvre du procédé de communication selon la revendication 1, lorsque ce programme est exécuté par un processeur.

12. Equipement utilisateur comprenant des moyens de transmission d'un paquet comprenant une requête d'accès à un service, pour un réseau de communication en mode paquet, par l'intermédiaire d'un réseau d'accès, au moyen d'une première session établie entre ledit équipement utilisateur et une première passerelle d'accès, ledit équipement utilisateur comprenant en outre :
- des moyens de réception d'une commande d'établissement d'une nouvelle session ;
- des moyens de traitement de ladite commande d'établissement d'une nouvelle session ;
- des moyens d'établissement de la nouvelle session, la nouvelle session étant établie une fois ladite commande traitée, entre ledit équipement utilisateur et une deuxième passerelle d'accès, déterminée en fonction du service requis par ledit équipement utilisateur.

## Patentansprüche

1. Verfahren zur Kommunikation in einem paketvermittelten Kommunikationsnetz (2) zwischen einem Benutzergerät (1) und einem Datennetz (30, 32), wobei eine Sitzung zwischen dem Benutzergerät und einem Zugangsgateway (20, 22) zum Zugriff auf das Datennetz über ein Zugangsnetz aufgebaut worden ist, wobei das Verfahren umfasst:
- einen Schritt der Detektion (E11, E1) einer Anforderung zum Zugriff auf einen Dienst ausgehend von wenigstens einem Paket, das von dem Benutzergerät mittels der aufgebauten Sitzung übertragen wurde;
- einen ersten Schritt der Bestimmung (E12, E1), in Abhängigkeit von wenigstens einem Kriterium, dass eine neue Sitzung aufzubauen ist;
- einen Schritt des Sendens (E22, E2) eines Befehls zum Aufbau einer neuen Sitzung an das Benutzergerät, wobei das Benutzergerät den Aufbau der neuen Sitzung einleitet;
- einen zweiten Schritt der Bestimmung (E23, E2) eines anderen Zugangsgateways, wobei dieses andere Gateway an den von dem Benutzergerät angeforderten Dienst angepasst ist;
- eine Phase des Aufbaus der neuen Sitzung, die von dem Benutzergerät eingeleitet wird, an deren Ende die neue Sitzung zwischen dem Benutzergerät und dem anderen Gateway aufgebaut ist.

2. Verfahren zur Kommunikation nach Anspruch 1, wobei das Kriterium der Gruppe angehört, die eine Kennung des Dienstes und eine Kennung einer Anwendung umfasst.

3. Verfahren zur Kommunikation nach Anspruch 1, wobei der Schritt der Detektion durch Inspektion eines Paketstroms durchgeführt wird, welcher der Sitzung zugeordnet ist.

4. Verfahren zur Kommunikation nach Anspruch 1, wobei das andere Gateway auch in Abhängigkeit von wenigstens einer Information bestimmt wird, die sich auf das Benutzergerät bezieht.

5. Verfahren zur Kommunikation nach Anspruch 4, wobei die Information der Gruppe angehört, welche eine auf einen Standort bezogene Information, eine auf Abonnementsdaten bezogene Information und einen Typ des Benutzergerätes umfasst.

6. Verfahren zur Kommunikation nach Anspruch 1, wobei eines der zwei Zugangsgateways eine Anforderung zum Aufbau einer neuen Sitzung zu einer Mobilitätsmanagementeinheit (10, 12) überträgt.

7. Verfahren zur Kommunikation nach Anspruch 6, wobei das Zugangsgateway den Detektionsschritt und den ersten Bestimmungsschritt durchführt und die Anforderung zum Aufbau der neuen Sitzung zu der Mobilitätsmanagementeinheit (10, 12) überträgt, wobei die Mobilitätsmanagementeinheit daraufhin den Schritt des Sendens des Befehls zum Aufbau und den zweiten Bestimmungsschritt durchführt.

8. Verfahren zur Kommunikation nach Anspruch 1, wobei, wenn das Kommunikationsnetz Einrichtungen zur Kontrolle der Netzrichtlinien und der Fakturierung umfasst,
- der Detektionsschritt und der erste Bestimmungsschritt von einer Einrichtung durchgeführt werden, welche Netzrichtlinien anwendet (20, 22);
- eine Einrichtung, welche die Netzrichtlinien liefert (24), das andere Zugangsgateway bestimmt und auf Initiative des Benutzergerätes die Anforderung zur Auslösung des Aufbaus der neuen Verbindung zu dem anderen Zugangsgateway überträgt.

9. System (3), welches ein paketvermitteltes Kommunikationsnetz (2) umfasst, wobei das System dafür ausgelegt ist, wenigstens eine Sitzung zwischen wenigstens einem Benutzergerät (1) und einem Zugangsgateway (20, 22) zum Zugriff auf ein Datennetz (30, 32) über ein Zugangsnetz aufzubauen, wobei das System umfasst:
- das Benutzergerät (1), das Zugangsgateway (20, 22) und das Zugangsnetz;
- Mittel zur Detektion (102, 304) einer Anforderung zum Zugriff auf einen Dienst ausgehend von wenigstens einem Paket, das von dem Benutzergerät mittels der aufgebauten Sitzung übertragen wurde;
- erste Bestimmungsmittel (103, 305), die dafür ausgelegt sind, in Abhängigkeit von wenigstens einem Kriterium zu bestimmen, dass eine neue Sitzung aufzubauen ist;
- Kommunikationsmittel (202), die dafür ausgelegt sind, einen Befehl zum Aufbau einer neuen Sitzung an das Benutzergerät zu senden, um die neue Sitzung zwischen dem Benutzergerät und einem anderen Zugangsgateway des paketvermittelten Kommunikationsnetzes aufzubauen, wobei das Benutzergerät dafür ausgelegt ist, den Aufbau der neuen Sitzung einzuleiten;
- zweite Bestimmungsmittel (203, 302) zur Bestimmung des anderen Zugangsgateways, wobei dieses andere Gateway an den von dem Benutzergerät angeforderten Dienst angepasst ist.

10. System nach Anspruch 9, wobei das Benutzergerät dafür ausgelegt ist, einen Befehl zum Aufbau einer neuen Sitzung zu empfangen und diese Anforderung zu verarbeiten.

11. Computerprogramm, welches Anweisungen zur Durchführung des Verfahrens zur Kommunikation nach Anspruch 1, wenn dieses Programm von einem Prozessor ausgeführt wird, enthält.

12. Benutzergerät, welches Mittel zur Übertragung eines Pakets umfasst, das eine Anforderung zum Zugriff auf einen Dienst für ein paketvermitteltes Kommunikationsnetz über ein Zugangsnetz mittels einer ersten Sitzung, die zwischen dem Benutzergerät und einem ersten Zugangsgateway aufgebaut ist, umfasst, wobei das Benutzergerät außerdem umfasst:
- Mittel zum Empfang eines Befehls zum Aufbau einer neuen Sitzung;
- Mittel zur Verarbeitung des Befehls zum Aufbau einer neuen Sitzung;
- Mittel zum Aufbau der neuen Sitzung,
wobei die neue Sitzung, sobald der Befehl verarbeitet worden ist, zwischen dem Benutzergerät und einem zweiten Zugangsgateway aufgebaut wird, das in Abhängigkeit von dem Dienst bestimmt wird, der von dem Benutzergerät angefordert wird.

## Claims

1. Method of communication in a packet mode communication network (2) between a user entity (1) and a data network (30, 32), a session having been established between said user entity and a gateway (20, 22) for access to the data network by way of an access network, said method comprising:
- a step (E11, E1) of detecting a request for access to a service on the basis of at least one packet transmitted by the user entity by means of the established session;
- a first step (E12, E1) of determining as a function of at least one criterion that a new session has to be established;
- a step (E22, E2) of dispatching to the user entity a command regarding establishment of a new session, said user entity initiating the establishment of the new session;
- a second step (E23, E2) of determining another access gateway, said other gateway being suitable for the service requested by the user entity;
- a phase of establishment of the new session initiated by the user entity, on completion of which the new session is established between said user entity and said other gateway.

2. Communication method according to Claim 1, in which the criterion belongs to the group comprising an identifier of the service, and an identifier of an application.

3. Communication method according to Claim 1, in which the detection step is implemented by inspection of a packet stream associated with said session.

4. Communication method according to Claim 1, in which the other gateway is also determined as a function of at least one item relating to the user entity.

5. Communication method according to Claim 4, in which said item belongs to the group comprising an item relating to a location, an item relating to subscription data, and a type of user entity.

6. Communication method according to Claim 1, in which one of the two access gateways transmits a request regarding establishment of a new session to a mobility management entity (10, 12).

7. Communication method according to Claim 6, in which the access gateway implements the detection step and the first determination step and transmits to the mobility management entity (10, 12) the request regarding establishment of the new session, said mobility management entity then implementing the step of dispatching the establishment command and the second determination step.

8. Communication method according to Claim 1, in which, with the communication network comprising entities for controlling network policies and charging,
- the detection step and the first determination step are implemented by an entity applying network policies (20, 22);
- an entity providing the network policies (24) determines the other access gateway and transmits to said other access gateway the request triggering establishment of the new session on the initiative of the user entity.

9. System (3) comprising a packet mode communication network (2), said system being designed to establish at least one session between at least one user entity (1) and a gateway (20, 22) for access to a data network (30, 32) by way of an access network, said system comprising:
- the user entity (1), the access gateway (20, 22) and the access network;
- means (102, 304) for detecting a request for access to a service on the basis of at least one packet transmitted by the user entity by means of the established session;
- first determination means (103, 305), designed to determine as a function of at least one criterion that a new session has to be established;
- communication means (202), designed to dispatch to the user entity a command regarding establishment of a new session to establish the new session between the user entity and another access gateway of the packet mode communication network, said user entity being designed to initiate the establishment of the new session;
- second means (203, 302) for determining said other access gateway, said other gateway being suitable for the service requested by the user entity.

10. System according to Claim 9, in which the user entity is designed to receive a command regarding establishment of a new session and to process said request.

11. Computer program comprising instructions for the implementation of the communication method according to Claim 1, when this program is executed by a processor.

12. User entity comprising means for transmitting a packet comprising a request for access to a service, for a packet mode communication network, by way of an access network, by means of a first session established between said user entity and a first access gateway, said user entity furthermore comprising:
- means for receiving a command regarding establishment of a new session;
- means for processing said command regarding establishment of a new session;
- means for establishing the new session,
the new session being established once said command has been processed, between said user entity and a second access gateway, determined as a function of the service requested by said user entity.
